# EUROPEAN PATENT APPLICATION

(11) **EP 4 716 070 A1**
(43) Date of publication of application: **25.03.2026**
(21) Application number: 23937421.8
(22) Date of filing: 15.05.2023
(51) Int. Cl.: H02K 5/04

(54) **MOTOR UNIT**

(71) Applicant: Mitsubishi Electric Mobility Corporation, Tokyo 100-8310 (JP)
(72) Inventor: HIGASHINO, Hiroyuki, Tokyo 100-8310 (JP); IPPOSHI, Shigetoshi, Tokyo 100-8310 (JP); MURAKAMI, Tadashi, Tokyo 100-8310 (JP); NAKAMURA, Masashi, Tokyo 100-8310 (JP); HASHIBA, Takashi, Tokyo 100-8310 (JP)
(74) Representative: Plasseraud IP
(86) International application number: PCT/JP2023/018024
(87) International publication number: WO 2024/236675

(57) **Abstract**

A motor unit includes: an electric motor (10) including: a rotor (11); a stator (12); and a housing (13) that internally houses the rotor (11) and the stator (12), the housing (13) having: an upper portion where an oil path (61) where a cooling oil flows and outlet paths (71) to (74) where the cooling oil is discharged from the oil path (61) toward the stator (12) are formed; and a lower portion having a cooling oil storage unit (81); a reducer (20) including: a reducer mechanism (22) including a plurality of gears (22a) (22b); and a gear case (23) that internally houses the reducer mechanism (22), and has a lower portion having a cooling oil storage unit (82) communicating with the storage unit (81) in the housing (13), the reducer (20) having a second end surface on which a first end surface of the electric motor (10) is mounted, and transmitting power from the electric motor (10) at a reduced rotation speed; an oil pump (30) that is mounted on a first end surface of the reducer (20), draws up the cooling oil accumulated in the storage unit (82) in the gear case (23), and causes the cooling oil to circulate through the oil path (61) in the housing (13); and an oil cooler (40) that is mounted on the first end surface of the reducer (20), has an inlet port (40a) which is connected to a cooling oil outlet port (30b) of the oil pump (30), cools the cooling oil from the outlet port (30b) of the oil pump (30), and has an outlet port (40b) where the cooled cooling oil is discharged into a cooling oil flow path between the outlet port (40b) and an inlet port of the oil path (61) in the housing (13).

## Description

### TECHNICAL FIELD

The present disclosure relates to a motor unit including an electric motor and a reducer.

### BACKGROUND ART

A motor unit including an electric motor and a reducer that are used for the power train mounted on electric automobiles (EV) and the like is described in Patent Literature 1.

Patent Literature 1 describes the following motor unit.

That is, a horizontally-extending housing space having a motor chamber housing a motor and a gear chamber housing a gear unit having a reducer apparatus and a differential apparatus is provided inside the housing.

An oil reservoir is positioned below the gear chamber.

Oil accumulated in the oil reservoir is scooped up by the operation of the differential apparatus. Part of the oil is dispersed in the gear chamber, is distributed thoroughly on each gear tooth surface of the reducer apparatus and the differential apparatus, drips down, and is collected in the oil reservoir.

In addition, the oil accumulated in the oil reservoir is scooped up by the differential apparatus, is introduced into a rotor, is dispersed evenly toward a stator due to centrifugal force generated by the rotation of the rotor, cools the stator, drips down, is accumulated in the lower area in the motor chamber, and moves to the gear chamber.

The oil accumulated in the oil reservoir is drawn up by a pump, cooled by a cooler, and thereafter pulled up to the top side of the motor. The oil is supplied to the motor, and takes heat out of the stator and cools the motor while flowing along the outer circumferential surface of the stator. After having flowed along the outer circumferential surface of the stator, the oil drips down, is accumulated in the lower area in the motor chamber, and moves to the gear chamber.

The pump is positioned below the motor chamber.

The cooler is positioned vertically below the motor chamber, and at least parts of the contact surface of the cooler and a first side wall surface overlap each other in the axial direction.

An inverter unit is fixed to the radially-outwardly-facing outer circumferential surface of a motor housing unit.

### CITATION LIST

### PATENT LITERATURE

Patent Literature 1: WO 2019/131417

### SUMMARY OF INVENTION

### TECHNICAL PROBLEM

There is a problem with the motor unit described in Patent Literature 1 that, since the pump is positioned below the motor chamber, and the cooler is provided being positioned vertically below the motor chamber, the weight balance shifts toward the motor chamber undesirably.

In addition, since the contact surface of the cooler and the first side wall surface are provided overlapping each other, the cooler is directly affected by heat generated from the motor. Accordingly, there are concerns about undesirable deterioration in the oil cooling performance of the cooler.

The present disclosure has been made in view of the matters described above, and an object thereof is to obtain a motor unit, including an electric motor and a reducer, that has less weight imbalance, and reduces deterioration in the cooler cooling performance.

### SOLUTION TO PROBLEM

A motor unit according to the present disclosure includes: an electric motor including: a rotor; a stator; and a housing that internally houses the rotor and the stator, the housing having: an upper portion where an oil path where a cooling oil flows and an outlet path where the cooling oil is discharged from the oil path toward the stator are formed; and a lower portion having a cooling oil storage unit; a reducer including: a reducer mechanism including a plurality of gears; and a gear case that internally houses the reducer mechanism, and has a lower portion having a cooling oil storage unit communicating with the storage unit in the housing, the reducer having a second end surface on which a first end surface of the electric motor is mounted, and to transmit power from the electric motor at a reduced rotation speed; an oil pump that is mounted on a first end surface of the reducer, and to draw up the cooling oil accumulated in the storage unit in the gear case, and to cause the cooling oil to circulate through the oil path in the housing; and an oil cooler that is mounted on the first end surface of the reducer, has an inlet port which is connected to a cooling oil outlet port of the oil pump, cools the cooling oil from the outlet port of the oil pump, and has an outlet port where the cooled cooling oil is discharged into a cooling oil flow path between the outlet port and an inlet port of the oil path in the housing.

### ADVANTAGEOUS EFFECTS OF INVENTION

According to the present disclosure, a motor unit can have less weight imbalance, and reduce deterioration in the cooler cooling performance.

### BRIEF DESCRIPTION OF DRAWINGS

FIG. 1 is a perspective view illustrating the appearance of a motor unit according to a first embodiment.
FIG. 2 is a side view illustrating the appearance of the motor unit according to the first embodiment.
FIG. 3 is a perspective cross-sectional view illustrating main units of the motor unit according to the first embodiment.
FIG. 4 is a cross sectional view taken along B-B in FIG. 2.
FIG. 5 is a drawing equivalent to the cross section taken along B-B of a motor unit according to a second embodiment.

### DESCRIPTION OF EMBODIMENTS

### First Embodiment.

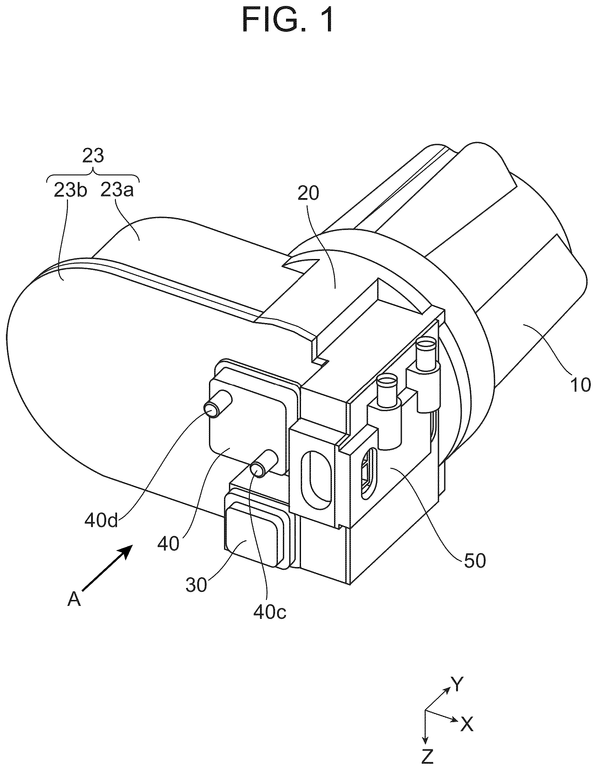

A motor unit according to a first embodiment is explained using FIG. 1 to FIG. 4.

The motor unit according to the first embodiment is a motor unit including an electric motor 10 and a reducer 20 used for a power train mounted on an electric automobile (EV) or the like.

The motor unit according to the first embodiment includes the electric motor 10, the reducer 20, an oil pump 30, an oil cooler 40, and an inverter unit 50.

Note that, in FIG. 1 to FIG. 4, the X-axis direction of an XYZ coordinate system represents the front-rear direction of a vehicle on which the motor unit is mounted, the Y-axis direction of the XYZ coordinate system represents the left-right direction of the vehicle, and the Z-axis direction of the XYZ coordinate system represents the vertical direction.

In the present example, the electric motor 10 generates motive power for the traveling of an electric automobile, and generates braking force through regenerative braking during deceleration.

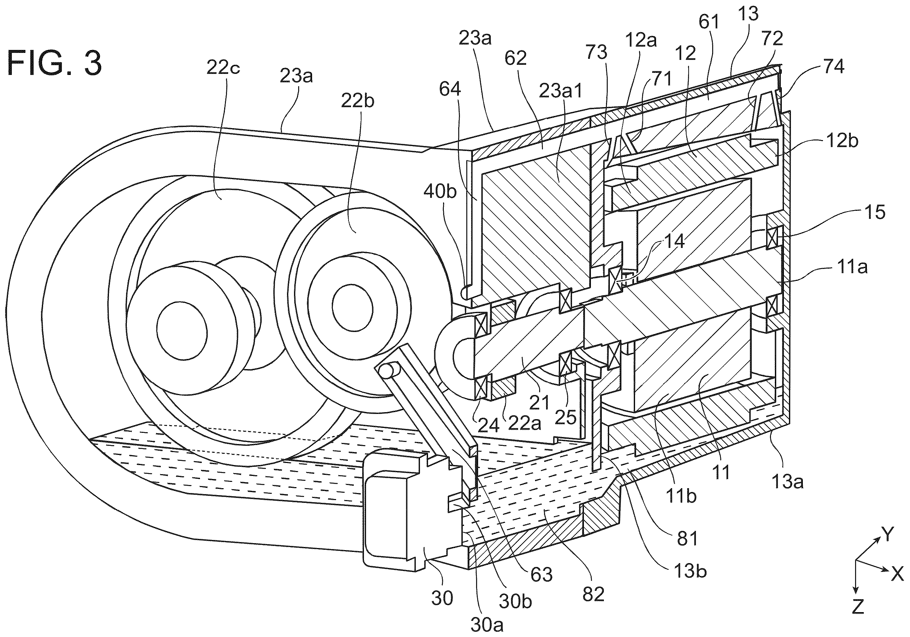

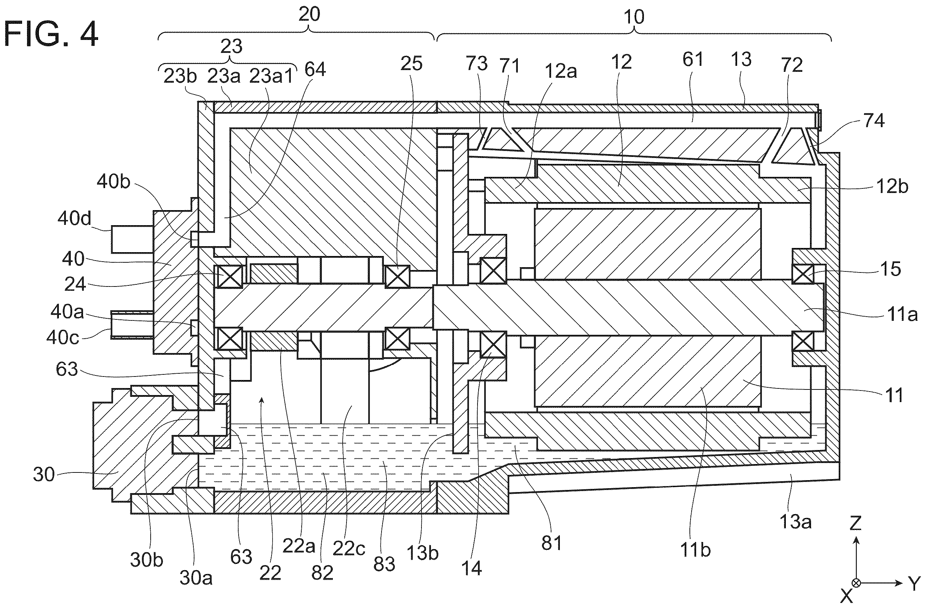

As illustrated in FIG. 3 and FIG. 4, the electric motor 10 has a rotor 11, a stator 12, a housing 13, a front bearing 14, and a rear bearing 15.

The rotor 11 rotates about the rotational axis extending in the horizontal direction, which is the Y-axis direction in the present example.

The rotor 11 has a rotational shaft (shaft) 11a, a rotor core 11b, and rotor magnets (not illustrated), and is housed inside the housing 13.

The rotational shaft 11a has the first end which is rotatably journaled by the front bearing 14, and the second end which is rotatably journaled by the rear bearing 15, and rotates about the rotational axis.

The rotor core 11b includes silicon steel sheets that are stacked one on another. The rotor core 11b is a cylindrical body extending along the axial direction, and is fixed at its middle to the rotational shaft 11a. A plurality of rotor magnets are fixed to the rotor core 11b. The plurality of rotor magnets are arranged in parallel along the circumferential direction, with alternating magnetic poles.

The stator 12 is positioned on the radially outer side of the rotor 11, housed inside the housing 13, and retained at the housing 13.

The stator 12 has a stator core and a coil. The coil of the stator 12 is electrically connected to the inverter unit 50 via a busbar.

The coil of the stator 12 has: a front coil end 12a protruding in the axial direction from the first end of the stator core toward the first-end-surface side of the electric motor 10; and a rear coil end 12b protruding in the axial direction from the second end of the stator core toward the second-end-surface side of the electric motor 10.

When power is supplied to the stator 12, the rotor 11 rotates about the rotational axis.

The rotor 11 and the stator 12 are included in a typically known inner rotor-type motor.

The housing 13 internally houses the rotor 11 and the stator 12.

The housing 13 has a body 13a and a front cover 13b.

The body 13a is a bottomed tubular body having the open first end. In the present example, the open side is referred to as the front or a first end surface, and the bottom side is referred to as the rear or a second end surface.

The middle inner side of the bottom of the body 13a has a support unit that supports the rear bearing 15.

The front cover 13b covers the open first end of the body 13a, and has, at its middle, an insertion hole through which the first end of the rotational shaft 11a of the rotor 11 is inserted.

The insertion hole of the front cover 13b has a support unit that supports the front bearing 14.

The rotational shaft 11a has the first end which is rotatably journaled by the front bearing 14, and the second end which is rotatably journaled by the rear bearing 15.

As illustrated in FIG. 3 and FIG. 4, an oil path 61 where a cooling oil flows, and outlet paths 71 and 72 where the cooling oil is discharged from the oil path 61 toward the stator 12 are formed at the upper portion of the body 13a of the housing 13.

The cooling oil serves as a lubricant and a coolant, and it is preferable to use a lubricant for automatic transmissions with low viscosity or the like.

As illustrated in FIG. 3 and FIG. 4, the oil path 61 constitutes a first oil path formed linearly parallel to the Y-axis above the stator 12.

The outlet path 71 is a front-coil-end outlet path that is provided branching off from the first oil path 61 on an inlet-port side of the first oil path 61, and is for ejecting, toward the front coil end 12a, the cooling oil flowing through the first oil path 61.

The cooling oil ejected from the outlet path 71 toward the front coil end 12a cools the front coil end 12a.

The cooling oil ejected toward the front coil end 12a flows along the outer circumferential surface of the front coil end 12a, and drips down into a storage unit 81.

The outlet path 72 is a rear-coil-end outlet path that is provided branching off from the first oil path 61 on the side opposite the inlet port of the first oil path 61, that is, on the second-end-surface side of the electric motor 10, and is for ejecting, toward the rear coil end 12b, the cooling oil flowing through the first oil path 61.

The cooling oil ejected from the outlet path 72 toward the rear coil end 12b cools the rear coil end 12b.

The cooling oil ejected toward the rear coil end 12b flows along the outer circumferential surface of the rear coil end 12b, and drips down into the storage unit 81.

Outlet paths 73 and 74 where the cooling oil is discharged from the oil path 61 toward the front bearing 14 and the rear bearing 15 are formed at the upper portion of the body 13a of the housing 13.

The outlet path 73 is a front-bearing outlet path that is provided branching off from the first oil path 61 on the inlet-port side of the first oil path 61, or the first-end-surface side of the electric motor 10 relative to the front-coil-end outlet path 71, and is for ejecting, toward the front bearing 14, the cooling oil flowing through the first oil path 61.

The cooling oil ejected from the outlet path 73 toward the front bearing 14 lubricates the front bearing 14, and drips down into the storage unit 81 after the lubrication.

The outlet path 74 is a rear-bearing outlet path that is provided branching off from the first oil path 61 on the side opposite the inlet-port side of the first oil path 61, that is, the second-end-surface side of the electric motor 10, or the second-end-surface side of the electric motor 10 relative to the rear-coil-end outlet path 72, and is for ejecting, toward the rear bearing 15, the cooling oil flowing through the first oil path 61.

The cooling oil ejected from the outlet path 74 toward the rear bearing 15 lubricates the rear bearing 15, and drips down into the storage unit 81 after the lubrication.

The cooling oil storage unit 81 is provided at the lower portion of the housing 13.

The storage unit 81 is an oil pan.

The bottom surface of the storage unit 81 is formed with an inclination that gradually lowers toward the first-end-surface side of the electric motor 10 in such a manner that the stored cooling oil flows to the first-end-surface side of the electric motor 10.

The cooling oil having cooled the stator 12 and the cooling oil having lubricated the bearings 14 and 15 drip down, and are collected in the storage unit 81.

In the present example, the reducer 20 transmits power generated by the electric motor 10 to the drive wheels (drive shaft, not illustrated) of an electric automobile at a reduced rotation speed.

The first end surface of the electric motor 10 is mounted in contact with the second end surface of the reducer 20, and the electric motor 10 is mounted parallel to the reducer 20 in the horizontal direction, which is the Y-axis direction in the present example.

The first end surface of the electric motor 10 is halved along a vertical line, which corresponds to the Z-axis in the present example, into a contact surface including the insertion hole of the housing 13 through the first end of the rotational shaft 11a is inserted, which is the insertion hole of the front cover 13b in the present example, and a non-contact surface, which is the remainder. The contact surface in the first end surface of the electric motor 10 and a contact surface in the second end surface of the reducer 20 contact each other, thereby attaching the electric motor 10 to the reducer 20.

The non-contact surface in the first end surface of the electric motor 10, that is, a non-contact surface in the first end surface of the front cover 13b, serves as an exposed surface.

As illustrated in FIG. 3 and FIG. 4, the reducer 20 has a gear rotational shaft 21, a reducer mechanism 22, a gear case 23, and a pair of gear bearings 24 and 25.

The gear rotational shaft 21 has the second end surface which is coupled with the first end surface of the rotational shaft 11a coaxially with the rotational shaft 11a of the electric motor 10, has the first end which is rotatably journaled by the gear bearing 24, has the second end which is rotatably journaled by the gear bearing 25, and rotates about the rotational axis by receiving the rotational force of the rotational shaft 11a transmitted thereto.

Note that the gear rotational shaft 21 may be formed integrally with the rotational shaft 11a.

The reducer mechanism 22 includes a plurality of gears, and transmits power transmitted to the gear rotational shaft 21 via the rotational shaft 11a of the electric motor 10 to the drive wheels (drive shaft) at a reduced rotation speed.

The reducer mechanism 22 has: a gear 22a fixed to the gear rotational shaft 21; a plurality of gears 22b and 22c to each transmit power from the gear 22a at a reduced rotation speed according to the corresponding gear ratio; and gear rotational shafts for the plurality of gears 22b and 22c, each journaled by a pair of bearings.

The plurality of gears 22b and 22c engage with each other in the X-axis direction.

The gear case 23 internally houses the reducer mechanism 22.

The gear case 23 has a first gear case 23a and a second gear case 23b.

The first gear case 23a is a bottomed tubular body having the open first end.

Assuming for convenience that the first gear case 23a has the first end surface as a plane, the second end surface as a bottom surface, and the remainder as a left side surface, a right side surface, a front surface, and a rear surface, the plane is an opening, the bottom surface has a flat plate having an insertion hole communicating with the insertion hole of the front cover 13b, the front surface and the rear surface have parallel flat plates, the left side surface has a semicircular curved plate, and the right side surface has a flat plate.

The upper portion on the right-side-surface side of the first gear case 23a has a thickness portion 23a1 extending from the bottom surface and the right side surface.

The inner surface of the thickness portion is circular so as to prevent the inner surface from interfering with the rotation of the gear 22b and the like.

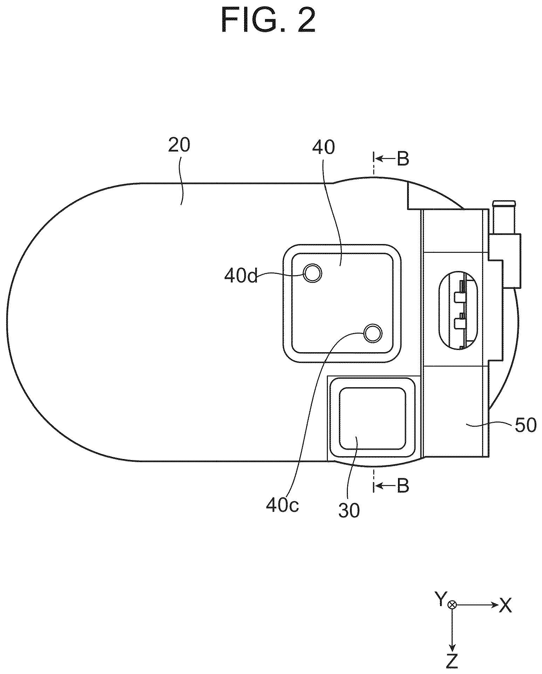

The second end surface of the first gear case 23a has: a contact surface that contacts the contact surface in the first end surface of the electric motor 10 including the insertion hole; and a non-contact surface positioned on the left side in FIG. 2.

The inner side of the bottom of the first gear case 23a has: a support unit that supports the gear bearing 25; and a plurality of support units that support gear bearings that journal the second end sides of the gear rotational shafts for the plurality of gears 22b and 22c.

The second gear case 23b includes a flat plate that covers the open first end of the first gear case 23a, and that has an external shape identical to the external shape of the front surface of the first gear case 23a.

The inner side of the inner surface of the second gear case 23b has: a support unit that supports the gear bearing 24; and a plurality of support units that support gear bearings that journal the second end sides of the gear rotational shafts for the plurality of gears 22b and 22c.

As illustrated in FIG. 3 and FIG. 4, the upper portion of the gear case 23, which is the upper portion of the thickness portion 23a1 in the first gear case 23a in the present example, has an oil path 62 (second oil path) where the cooling oil flows linearly parallel to the Y-axis.

The cooling oil outlet port of the second oil path 62 is connected with the cooling oil inlet port of the first oil path 61 at the second end surface of the reducer 20 and the first end surface of the electric motor 10.

The second oil path 62 and the first oil path 61 are directly coupled with each other by causing the contact surface in the first end surface of the electric motor 10 and the contact surface in the second end surface of the reducer 20 to come into contact with each other, and by making the electric motor 10 attached to the reducer 20.

The lower portion of the gear case 23, which is the lower portion of the first gear case 23a in the present example, has a cooling oil storage unit 82.

The storage unit 82 is an oil pan.

The storage unit 82 communicates with the storage unit 81 in the housing 13 at the contact surface between the second end surface of the gear case 23 and the first end surface of the electric motor 10.

The cooling oil stored in the storage unit 81 flows into the storage unit 82, and is stored in the storage unit 82.

The outer circumferential portion of at least the largest-diameter gear 22c in the plurality of gears 22b and 22c in the reducer mechanism 22 is immersed in the cooling oil 83 stored in the storage unit 82.

The rotation of the gear 22a and the plurality of gears 22b and 22c in the reducer mechanism 22 causes the large-diameter gear 22c immersed in the cooling oil 83 at its outer circumferential portion to scoop up the cooling oil 83.

The cooling oil having been scooped up by the large-diameter gear 22c is scattered in the gear case 23, lubricates the gear bearings 24 and 25 and others, and drips down into the storage unit 82 after the lubrication.

The oil pump 30 is mounted on the first end surface of the reducer 20.

When seen from the side of the oil pump 30 toward the side of the electric motor 10, that is, as illustrated in FIG. 2, when seen through from the plane side represented by an arrow A illustrated in FIG. 1, the oil pump 30 is attached within the first end surface of the electric motor 10, and to the first end surface of the reducer 20 positioned at the lower portion, which is the first end surface of the second gear case 23b in the present example.

The oil pump 30 is attached to the reducer 20 on the side opposite the electric motor 10 with the reducer 20 being interposed therebetween.

As illustrated in FIG. 3 and FIG. 4, at least a part of a cooling oil intake port 30a of the oil pump 30 is immersed in the oil pan constituting the storage unit 82 below the rotational axis of the gear rotational shaft 21 in the reducer 20.

The oil pump 30 draws up the cooling oil accumulated in the storage unit 82 in the gear case 23, and causes the cooling oil to circulate through the first oil path 61 formed at the upper portion of the housing 13.

The oil cooler 40 is mounted on the first end surface of the reducer 20.

When seen from the side of the oil cooler 40 toward the side of the electric motor 10, that is, as illustrated in FIG. 2, when seen through from the plane side, the oil cooler 40 is attached in the first end surface of the electric motor 10, and attached to the first end surface of the reducer 20, which is the first end surface of the second gear case 23b in the present example, positioned above the oil pump 30 and below the second oil path 62 formed at the upper portion of the gear case 23.

The oil cooler 40 is attached to the reducer 20 on the side opposite the electric motor 10 with the reducer 20 being interposed therebetween.

As mentioned above, since the electric motor 10 is attached to the second end surface of the reducer 20 with the reducer 20 being interposed therebetween, and the oil pump 30 and the oil cooler 40 are attached to the first end surface of the reducer 20, weight imbalance of the motor unit is reduced.

In addition, since the oil cooler 40 is attached to the first end surface of the reducer 20 on the side opposite the electric motor 10 with the reducer 20 being interposed therebetween, the oil cooler 40 is not directly heated by heat generated by the electric motor 10, and is unlikely to be affected by heat generated by the electric motor 10, and deterioration in the cooling performance of the oil cooler 40 can be reduced.

Furthermore, since the gear case 23 has the first gear case 23a and the second gear case 23b, and the oil pump 30 and the oil cooler 40 are attached to the second end surface of the second gear case 23b, the oil pump 30 and the oil cooler 40, which are equipment for performing oil cooling, can be handled as one component attached to the second gear case 23b, thereby enhancing the ease of assembly.

As illustrated in FIG. 3, a cooling oil inlet port 40a in the oil cooler 40 is connected to a cooling oil outlet port 30b in the oil pump 30 by a third oil path 63.

As illustrated in FIG. 4, the third oil path 63 is formed inside the second gear case 23b in such a way as to linearly connect the cooling oil outlet port 30b in the oil pump 30 and the cooling oil inlet port 40a in the oil cooler 40.

The third oil path 63 is formed on the second end surface of the second gear case 23b by monolithic molding by casting or the like using a core.

Note that the third oil path 63 may be formed by attaching a separate component such as a molded part or a machined part to the second end surface of the flat-plate second gear case 23b.

The oil cooler 40 cools the cooling oil from the outlet port 30b in the oil pump 30, and discharges the cooled cooling oil from an outlet port 40b into a cooling oil flow path between the outlet port 40b and the inlet port of the first oil path 61 formed at the upper portion of the housing 13.

The cooling oil outlet port 40b in the oil cooler 40 is connected with a cooling oil inlet port of the second oil path 62 formed at the upper portion of the thickness portion 23a1 in the gear case 23 by a fourth oil path 64.

The fourth oil path 64 is disposed in such a way as to linearly connect the cooling oil outlet port 40b in the oil cooler 40 and the cooling oil inlet port of the second oil path 62.

The fourth oil path 64 is formed on the first-end-surface side of the thickness portion 23a1 in the gear case 23 linearly parallel to the Z-axis, and its inlet port is bent in the direction of the first end surface, and connected to the cooling oil outlet port 40b.

In addition, the outlet port of the fourth oil path 64 and the inlet port of the second oil path 62 do not exist physically separate entities, but are used as virtual references for convenience of explanation, and the fourth oil path 64 and the second oil path 62 are formed integrally.

That is, when the first gear case 23a included in the gear case 23 is produced using a mold or the like, a groove formed in the thickness portion 23a1 by pulling out the mold is covered with the second gear case 23b. Thereby, the communicating fourth oil path 64 and second oil path 62 are formed.

Note that the thickness portion 23a1 in which a groove connecting the cooling oil outlet port 40b in the oil cooler 40 and the inlet port of the first oil path 61 is formed may be a separate member.

In this case also, the communicating fourth oil path 64 and second oil path 62 are formed by covering the groove formed in the thickness portion 23a1 with the second gear case 23b, in the first gear case 23a provided with the thickness portion 23a1 as a separate member.

Accordingly, the cooling oil flow path between the cooling oil outlet port 40b in the oil cooler 40 and the inlet port of the first oil path 61 includes the fourth oil path 64 and the second oil path 62.

Cooling water having been cooled by a radiator (not illustrated) and having cooled the inverter unit 50 is introduced into the oil cooler 40 from a cooling water inlet port 40c, heat exchange occurs between the introduced cooling water and the introduced cooling oil to cool the cooling oil, and the cooling water after the heat exchange is discharged out of the oil cooler 40 from a cooling water outlet port 40d.

That is, the cooling oil passing through the oil cooler 40 exchanges heat with the cooling water, and gets cooled in the oil cooler 40.

A typically known heat exchanger that cools the cooling oil using a refrigerant can be used as the oil cooler 40.

Note that the refrigerant that exchanges heat with the cooling oil is not limited to cooling water, but may be another typically known refrigerant.

The cooling oil accumulated in the storage unit 82 in the gear case 23 is drawn up from the cooling oil intake port 30a in the oil pump 30, and the cooling oil having been drawn up is introduced from the cooling oil outlet port 30b in the oil pump 30 via the third oil path 63 into the cooling oil inlet port 40a in the oil cooler 40, is cooled by the oil cooler 40, and is discharged from the cooling oil outlet port 40b in the oil cooler 40.

The cooling oil discharged from the cooling oil outlet port 40b in the oil cooler 40 is introduced into the inlet port of the first oil path 61 via the fourth oil path 64 and the second oil path 62.

The cooling oil introduced into the inlet port of the first oil path 61 is ejected from the upper portion of the housing 13 into the housing 13, from the front-coil-end outlet path 71, the rear-coil-end outlet path 72, the front-bearing outlet path 73, and the rear-bearing outlet path 74.

The cooling oil having been ejected into the housing 13 from the upper portion of the housing 13 cools the front coil end 12a and the rear coil end 12b of the coil of the stator 12, lubricates the front bearing 14 and the rear bearing 15, and is collected in the storage unit 81.

That is, the cooling oil is caused to circulate from the storage unit 82 of the gear case 23 through the oil pump 30 → the third oil path 63 → the oil cooler 40 → the fourth oil path 64 → the second oil path 62 → the first oil path 61 → the outlet paths 71 to 74 → the stator, the bearing 14 and the bearing 15 → the storage unit 81 to the storage unit 82.

Since the oil pump 30 is attached to the lower portion of the second end surface of the reducer 20, at least a part of the cooling oil intake port 30a of the oil pump 30 is positioned below the oil surface of the cooling oil stored in the storage unit 82 of the gear case 23 necessarily. Accordingly, the insufficiency in suction of the cooling oil by the oil pump 30 can be prevented, and the cooling oil circulates smoothly.

The inverter unit 50 drives, that is, controls, the electric motor 10 by converting direct current into alternating current during traveling, and collects energy by converting alternating current from the electric motor 10 into direct current during deceleration (regeneration).

As illustrated in FIG. 1 and FIG. 2, the inverter unit 50 has the first side surface which faces the non-contact surface in the first end surface of the electric motor 10, and has the bottom surface which is attached to the first side surface of the reducer 20, which is a flat surface on the right side in the drawing and is the first side surface of the first gear case 23a in the present example.

In addition, a part of the bottom surface of the inverter unit 50, which is a part of the bottom surface protruding along the rotational axis from the first side surface of the reducer 20 in the present example, faces the first side surface of the oil pump 30 and the first side surface of the oil cooler 40.

The inverter unit 50 is disposed in a space located in the rotational axis direction from the non-contact surface in the first end surface of the electric motor 10, that is, a tubular space defined by two adjacent side surfaces which are the non-contact surface in the first end surface of the electric motor 10 and the first side surface of the reducer 20.

As a result, the effective use of space achieved with the electric motor 10 and the reducer 20 enables the downsizing of the external shape dimension of the motor unit.

Moreover, the oil pump 30 and the oil cooler 40 are arranged in a tubular space defined by two adjacent side surfaces which are the second end surface of the reducer 20 and the part of the bottom surface of the inverter unit 50.

As a result, the effective use of space achieved with the reducer 20 and the inverter unit 50 enables the downsizing of the external shape dimension of the motor unit.

The inverter unit 50 is cooled by the cooling water that exchanges heat with the cooling oil passing through the oil cooler 40 and cools the cooling oil.

The cooling water that cools the inverter unit 50 is the cooling water cooled by the radiator, and, after cooling the inverter unit 50, is introduced into the oil cooler 40 from the cooling water inlet port 40c of the oil cooler 40.

As mentioned above, in the motor unit according to the first embodiment including the electric motor 10 and the reducer 20, the oil pump 30 and the oil cooler 40 are attached to the first end surface of the reducer 20 opposite the second end surface of the reducer 20 to which the first end surface of the electric motor 10 is mounted. Accordingly, weight imbalance of the motor unit is reduced.

In the motor unit according to the first embodiment, the oil cooler 40 is positioned opposite the electric motor 10 with the reducer 20 being interposed therebetween. Accordingly, the oil cooler 40 is unlikely to be affected by heat generated by the electric motor 10, and deterioration in the cooling performance of the oil cooler 40 can be reduced.

Since the oil pump 30 is attached to the lower portion of the second end surface of the reducer 20 with the cooling oil intake port 30a in the oil pump 30 being positioned below the rotational axis of the gear rotational shaft 21 in the reducer 20 in the motor unit according to the first embodiment, the cooling oil intake port 30a in the oil pump 30 is immersed in the storage unit 82 of the gear case 23. Accordingly, the insufficiency in suction of the cooling oil by the oil pump 30 can be prevented, and the cooling oil circulates smoothly.

In the motor unit according to the first embodiment, the gear case 23 has the first gear case 23a and the second gear case 23b, and the oil pump 30 and the oil cooler 40 are attached to the second end surface of the second gear case 23b. Accordingly, the oil pump 30 and the oil cooler 40, which are equipment for performing oil cooling, can be handled as one component attached to the second gear case 23b, thereby enhancing the ease of assembly.

In the motor unit according to the first embodiment, the inverter unit 50 has the first side surface which faces the non-contact surface in the first end surface of the electric motor 10, and has the bottom surface which is attached to the first side surface of the reducer 20. Accordingly, the electric motor 10 and the reducer 20 can achieve the effective use of space regarding the attachment of the inverter unit 50 to the reducer 20, and enable the downsizing of the external shape dimension of the motor unit.

In the motor unit according to the first embodiment, the part of the bottom surface of the inverter unit 50 faces the first side surface of the oil pump 30 and the first side surface of the oil cooler 40, and the remainder of the bottom surface is attached to the first side surface of the reducer 20. Accordingly, the reducer 20 and the inverter unit 50 can achieve the effective use of space regarding the attachment of the oil pump 30 and the oil cooler 40 to the reducer 20, and enable the downsizing of the external shape dimension of the motor unit.

### Second Embodiment.

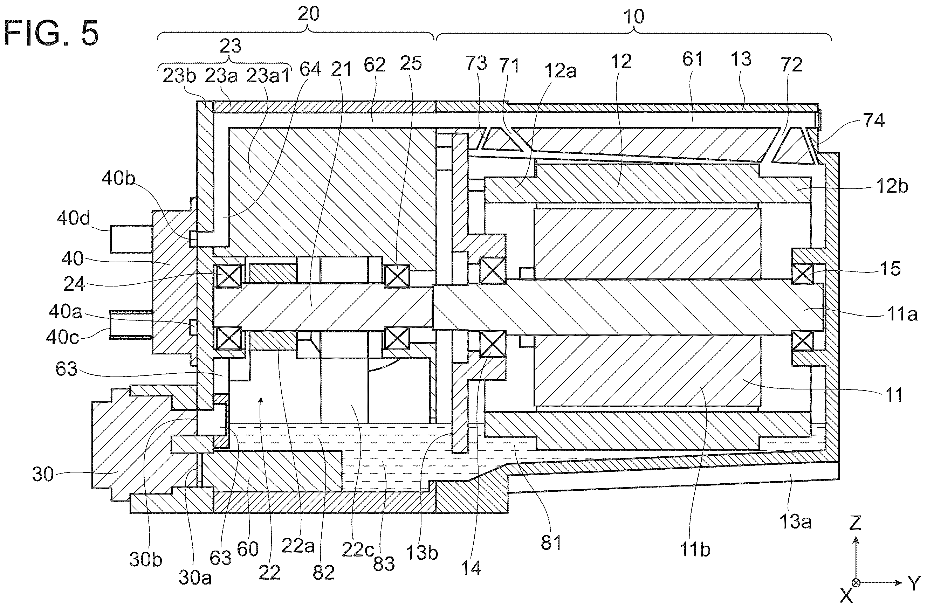

A motor unit according to a second embodiment is explained using FIG. 5.

The motor unit according to the second embodiment is different from the motor unit according to the first embodiment in that, inside a cooling oil storage unit 82 in a gear case 23 of a reducer 20, an oil filter 60 is included at a previous stage of a cooling oil intake port 30a in an oil pump 30, and is the same as the motor unit according to the first embodiment in other respects.

Note that reference signs in FIG. 5 that are identical to reference signs in FIG. 1 to FIG. 4 denote identical or equivalent portions.

The motor unit according to the second embodiment includes an electric motor 10, the reducer 20, the oil pump 30, an oil cooler 40, an inverter unit 50, and the oil filter 60.

The electric motor 10, the reducer 20, the oil pump 30, the oil cooler 40, and the inverter unit 50 in the motor unit according to the second embodiment are the same as the electric motor 10, the reducer 20, the oil pump 30, the oil cooler 40, and the inverter unit 50 in the motor unit according to the first embodiment, and accordingly explanations thereof are omitted.

As illustrated in FIG. 5, the oil filter 60 is disposed at the previous stage of the cooling oil intake port 30a in the oil pump 30 in such a manner that the oil filter 60 faces the cooling oil intake port 30a.

The oil filter 60 is fixed to the storage unit 82 inside the cooling oil storage unit 82 in the gear case 23 of the reducer 20.

Since the oil filter 60 is disposed at the previous stage of the cooling oil intake port 30a in the oil pump 30 in such a manner that the oil filter 60 faces the cooling oil intake port 30a, impurities in cooling oil stored in the cooling oil storage unit 82 in the gear case 23 of the reducer 20 can be removed efficiently by the oil filter 60 disposed at the previous stage of the cooling oil intake port 30a in the oil pump 30.

In addition, the side surface on the first-end-surface side of the storage unit 82 is constituted by a second gear case 23b, and the oil filter 60 is attached to an inner surface constituting the side surface on the first-end-surface side of the storage unit 82 in the second gear case 23b. Thereby, the oil pump 30 and the oil cooler 40, and the oil filter 60 can be handled as one component attached to the second gear case 23b. Accordingly, the ease of assembly is enhanced.

The motor unit according to the second embodiment achieves advantageous effects similar to those of the motor unit according to the first embodiment, and, in addition to them, can efficiently remove impurities in the cooling oil since the oil filter 60 is disposed inside the cooling oil storage unit 82 in the gear case 23 of the reducer 20.

Note that any combinations of embodiments, modifications of any components in embodiments, or omissions of any components in embodiments are possible.

### INDUSTRIAL APPLICABILITY

Motor units according to the present disclosure are suitable as motor units including an electric motor and a reducer used for the power train of an electric vehicle having a motor as a motive power source, such as an electric automobile (EV), a hybrid automobile (HEV), or a plug-in hybrid automobile (PHV).

### REFERENCE SIGNS LIST

10: Electric motor; 11: Rotor; 12: Stator; 12a: Front coil end; 12b: Rear coil end; 13: Housing; 13a: Body; 13b: Front cover; 14: Front bearing; 15: Rear bearing; 20: Reducer; 21: Gear rotational shaft; 22: Reducer mechanism; 23: Gear case; 23a: First gear case; 23b: Second gear case; 30: Oil pump; 40: Oil cooler; 50: Inverter unit; 60: Oil filter; 61: Oil path (first oil path); 62: Second oil path; 63: Third oil path; 64: Fourth oil path; 71 to 74: Outlet path; 81, 82: Storage unit

## Claims

1. A motor unit comprising:
an electric motor including: a rotor; a stator; and a housing that internally houses the rotor and the stator, the housing having: an upper portion where an oil path where a cooling oil flows and an outlet path where the cooling oil is discharged from the oil path toward the stator are formed; and a lower portion having a cooling oil storage unit;
a reducer including: a reducer mechanism including a plurality of gears; and a gear case that internally houses the reducer mechanism, and has a lower portion having a cooling oil storage unit communicating with the storage unit in the housing, the reducer having a second end surface on which a first end surface of the electric motor is mounted, and to transmit power from the electric motor at a reduced rotation speed;
an oil pump that is mounted on a first end surface of the reducer, and to draw up the cooling oil accumulated in the storage unit in the gear case, and to cause the cooling oil to circulate through the oil path in the housing; and
an oil cooler that is mounted on the first end surface of the reducer, has an inlet port which is connected to a cooling oil outlet port of the oil pump, cools the cooling oil from the outlet port of the oil pump, and has an outlet port where the cooled cooling oil is discharged into a cooling oil flow path between the outlet port and an inlet port of the oil path in the housing.

2. The motor unit according to claim 1, wherein
the cooling oil storage unit in the housing is an oil pan,
the cooling oil storage unit in the gear case is an oil pan, and
a cooling oil intake port of the oil pump is immersed in the oil pan of the gear case below a rotational axis of a gear rotational shaft of the reducer coupled with a rotational shaft of the rotor of the electric motor.

3. The motor unit according to claim 1, wherein
the oil path in the housing is a first oil path formed above the stator,
an upper portion of the gear case has a second oil path whose cooling oil outlet port is connected with a cooling oil inlet port of the first oil path at the first end surface of the electric motor and the second end surface of the reducer,
the motor unit further comprises: a third oil path connecting the cooling oil outlet port of the oil pump and the cooling oil inlet port of the oil cooler; and a fourth oil path connecting a cooling oil outlet port of the oil cooler and a cooling oil inlet port of the second oil path,
the outlet path in the housing has: a front-coil-end outlet path where the cooling oil is discharged from the first oil path toward a front coil end of the stator; and a rear-coil-end outlet path where the cooling oil is discharged from the first oil path toward a rear coil end of the stator, and
the outlet path in the housing further has: a front-bearing outlet path where the cooling oil is discharged from the first oil path toward a front bearing for a rotational shaft of the rotor; and a rear-bearing outlet path where the cooling oil is discharged from the first oil path toward a rear bearing of the rotational shaft of the rotor.

4. The motor unit according to claim 3, wherein
the gear case has:
a first gear case which is a bottomed tubular body having: an open first end; a bottom surface which serves as the second end surface of the reducer and in contact with the first end surface of the electric motor; and an upper portion in which the second oil path is formed; and
a second gear case that covers the open first end of the first gear case, has an outer surface which serves as the first end surface of the reducer and in contact with the oil pump and the oil cooler, and in which the third oil path is formed.

5. The motor unit according to claim 4, wherein the fourth oil path is formed by the first gear case and the second gear case being arranged in contact with each other.

6. The motor unit according to claim 4, wherein the fourth oil path is disposed on a second-end-surface side of the first gear case in such a manner that the fourth oil path communicates with the second oil path.

7. The motor unit according to claim 1, wherein
the oil pump is attached in the first end surface of the electric motor, and to the second end surface of the reducer positioned at a lower portion, when seen from a side of the oil pump toward a side of the electric motor, and
the oil cooler is attached in the first end surface of the electric motor, and to the second end surface of the reducer positioned above the oil pump, when seen from a side of the oil cooler toward the side of the electric motor.

8. The motor unit according to any one of claims 1 to 7, wherein
it is assumed that the first end surface of the electric motor is halved along a vertical line, one surface is a contact surface including an insertion hole of the housing through which a first end of a rotational shaft is inserted, and another surface is a non-contact surface,
the contact surface in the first end surface of the electric motor and a contact surface in the second end surface of the reducer contact each other to attach the electric motor to the reducer, and
the motor unit comprises an inverter unit that has a first side surface which faces the non-contact surface in the first end surface of the electric motor, has a bottom surface which is attached to a first side surface of the reducer, and to control the electric motor.

9. The motor unit according to claim 8, wherein the cooling oil passing through the oil cooler exchanges heat with a refrigerant having cooled the inverter unit, and is cooled, in the oil cooler.

10. The motor unit according to claim 7, wherein
it is assumed that the first end surface of the electric motor is halved along a vertical line, one surface is a contact surface including an insertion hole of the housing through which a first end of a rotational shaft is inserted, and another surface is a non-contact surface,
the contact surface in the first end surface of the electric motor and a contact surface in the second end surface of the reducer contact each other to attach the electric motor to the reducer, and
the motor unit comprises an inverter unit that has a first side surface which faces the non-contact surface in the first end surface of the electric motor, has a bottom surface, a part of which faces a first side surface of the oil pump and a first side surface of the oil cooler, has a remainder of the bottom surface which is attached to the first side surface of the reducer, and to control the electric motor.

11. The motor unit according to any one of claims 1 to 7 and 10, comprising an oil filter inside the cooling oil storage unit in the gear case of the reducer, the oil filter being located at a previous stage of a cooling oil intake port of the oil pump.
